# EUROPÄISCHE PATENTANMELDUNG

(11) **EP 1 320 235 A1**
(43) Veröffentlichungstag der Anmeldung: **18.06.2003**
(21) Anmeldenummer: 01129632.4
(22) Anmeldetag: 12.12.2001
(51) Int. Cl.: H04L 29/06

(54) **Telekommunikationsendgerät**

(71) Anmelder: SIEMENS AKTIENGESELLSCHAFT, 80333 München (DE)
(72) Erfinder: Naumann, Mirko, 82538 Geretsried (DE)

(57) **Zusammenfassung**

Die Erfindung betrifft ein Telekommunikationsendgerät zum Austausch von Nachrichten mittels eines Servers in einem Kommunikationsnetz, wobei durch auf einem Protokollstandard arbeitende Protokollmittel Nachrichten oder Informationen zwischen dem Telekommunikationsendgerät und dem zugeordneten Server austauschbar sind, und ferner ein Verfahren zum Betreiben des Telekommunikationsendgeräts. Die Erfindung sieht vor, daß Protokollfunktionen des Telekommunikationsendgeräts in dem Server implementiert und von dem Telekommunikationsendgerät betätigbar sind. Die aus dem Endgerät dislozierten Protokollfunktionen weisen im wesentlichen einen Parser zum Überprüfen von in einem externen Übertragungsformat ankommenden Daten und zum Umwandeln dieser Daten in ein intern verarbeitbares Format sowie einen Assembler zum Überprüfen von in dem intern verarbeitbaren Format vorliegenden Daten und zum Umwandeln dieser Daten in das zum Absenden erforderliche externe Übertragungsformat auf. Nachrichten zwischen dem Telekommunikationsendgerät und dem Server werden in dem intern verarbeitbaren Format übermittelt, während Nachrichten zwischen dem Server und dem zugrundeliegenden Kommunikationsnetz in dem externen Übertragungsformat übermittelt werden.

## Beschreibung

Die Erfindung betrifft ein Telekommunikationsendgerät zum Austausch von Nachrichten mittels eines Servers in einem Kommunikationsnetz, wobei durch gemäß einem Protokollstandard arbeitende Protokollmittel Nachrichten oder Informationen zwischen dem Telekommunikationsendgerät und dem zugeordneten Server austauschbar sind, ferner ein Verfahren zum Betreiben des Telekommunikationsendgeräts.

Bei derartigen Endgeräten kann es sich nach Maßgabe des zugrundeliegenden Kommunikationsnetzes beispielsweise um Mobiltelefone in einem als Mobilfunknetz ausgebildeten Kommunikationsnetz oder um schnurlose Telefone in einem sog. DECT-Netz (DECT: Digital European Cordless Telephone) handeln. Da zum Aufbau einer Kommunikationsverbindung in einem Kommunikationsnetz zwischen dem jeweiligen Endgerät und einem Server ein Signalisierungs-Protokollstandard erforderlich ist, muß das Endgerät zum Betrieb an dem jeweiligen Kommunikationsnetz mittels einer dem Protokollstandard entsprechenden Protokollsoftware konfiguriert sein. Indem die Protokollsoftware naturgemäß aufwendig ausgebildet ist, wird dadurch in relativ großem Umfang Speicherplatz und Rechenleistung im Endgerät beansprucht. In Endgeräten sind jedoch die Ressourcen an Speicherplatz und Rechenleistung lediglich in begrenztem Maße verfügbar, da insbesondere bei mobilen Endgeräten und schnurlosen Telefonen die Kosten für Speicherplatz und Prozessorleistung deren wirtschaftliche Konkurrenzfähigkeit maßgeblich bestimmen. Demgemäß wird beim Stand der Technik aus Kostengründen üblicherweise eher der Leistungsumfang der Endgeräte eingeschränkt.

Es besteht daher die Aufgabe, ein Telekommunikationsendgerät der eingangs genannten Art zu schaffen, mit dem ein Endgerät im wesentlichen ohne kostensteigernde Maßnahmen und ohne Leistungseinschränkungen auf dem Protokollstandard eines Kommunikationsnetzes betreibbar ist.

Die Aufgabe wird in vorrichtungstechnischer Hinsicht dadurch gelöst, daß Protokollfunktionen des Telekommunikationsendgeräts in dem Server implementiert und von dem Telekommunikationsendgerät betätigbar sind.

Charakteristisch für das erfindungsgemäße Telekommunikationsendgerät ist mithin, daß zumindest Teile der zur Signalisierung notwendigen Protokollmittel in dem dem Telekommunikationsendgerät zugeordneten Server aufgenommen und dort gespeichert sind. Zum Errichten bzw. Aufbau einer Kommunikationsverbindung zwischen dem Endgerät und dem jeweils zugeordneten Server greift das Endgerät auf die dem Endgerät zugehörigen und in dem Server implementierten Protokollfunktionen zu, wobei dieser Zugriff durch entsprechende im Endgerät laufende Applikationsprogramme initialisiert und durchgeführt wird. Dadurch werden im Telekommunikationsendgerät auf kostensparende Weise Ressourcen an Speicherplatz und Rechenleistung eingespart.

Eine bevorzugte Ausgestaltung der Erfindung sieht vor, daß als Protokollstandard ein Signalisierungsprotokoll vorgesehen ist, wobei das Signalisierungsprotokoll als "Session-Initiation-Protocol"-Protokollstandard ausgebildet ist. Dabei weisen die im Server implementierten Protokollfunktionen des Telekommunikationsendgeräts im wesentlichen einen Parser zum Überprüfen von in einem externen Übertragungsformat ankommenden Daten und zum Umwandeln dieser Daten in ein intern verarbeitbares Format sowie einen Assembler zum Überprüfen von in dem intern verarbeitbaren Format vorliegenden Daten und zum Umwandeln dieser Daten in das zum Absenden erforderliche externe Übertragungsformat auf. Da zum Überprüfen und Umwandeln der Daten komplexe Operationen mit Zeichenketten erforderlich sind, sind der Parser und der Assembler aufwendig konzipierte Algorithmen und benötigen somit relativ viel Speicher- und Rechenkapazität. Indem diese Funktionen von dem Endgerät in den Server verlagert sind, der gegenüber dem Endgerät größere Kapazitäten an Speicherplatz und Prozessorleistung aufweist, beanspruchen die im Endgerät verbleibenden Teile des Kommunikationsprotokolls im Endgerät einerseits entsprechend weniger Speicherplatz und andererseits eine entsprechend geringere Rechenkapazität.

Eine bevorzugte Ausführungsform des erfindungsgemäßen Telekommunikationsendgeräts kann darin bestehen, daß die im Server implementierten Protokollfunktionen des Telekommunikationsendgeräts mittels einer zugeordneten und im Telekommunikationsendgerät residenten Zustandsmaschine betätigbar sind. Indem die Zustandsmaschine, mit welcher als sequentiell eine vorbestimmte Folge von Zuständen durchlaufendes Programm die Protokollfunktionen des Parsers und des Assemblers aktivierbar sind, im Endgerät verbleibt, ergibt sich ein besonders einfacher Zugriff des Endgeräts auf seine in dem Server implementierten Protokollfunktionen.

Eine dazu alternative Ausführungsform kann darin bestehen, daß die im Server implementierten Protokollfunktionen des Telekommunikationsendgeräts die Zustandsmaschine für den Parser und den Assembler aufweisen. Somit sind sowohl die Zustandsmaschine als auch der Parser und der Assembler des Endgeräts in den Server verlagert, so daß dadurch im Endgerät nochmals der Bedarf an Speicherplatz und an erforderlicher Rechenkapazität sinkt. Zur Anwendung bei dem erfindungsgemäßen Telekommunikationsendgerät kommt somit ein Server, insbesondere ein Proxyserver, mit seiner vergleichsweise großen Speicher- und Rechenkapazität.

Die Aufgabe wird in verfahrenstechnischer Hinsicht dadurch gelöst, daß die dem Telekommunikationsendgerät zugeordneten und im Server implementierten Protokollfunktionen von dem Telekommunikationsendgerät betätigt werden. Indem speicherplatz- und rechenintensive Funktionen des Endgerätespezifischen Teils des Kommunikationsprotokolls in den Server disloziert sind, jedoch von im Endgerät verbliebenen Applikationen betätigbar sind, sind im Endgerät eine entsprechend geringere Speicher- und Prozessorkapazität erforderlich.

Gemäß einer Ausgestaltung des erfindungsgemäßen Verfahrens werden mittels der dem Telekommunikationsendgerät zugeordneten und im Server implementierten Protokollfunktionen in einem externen Übertragungsformat ankommende Daten überprüft und in ein intern verarbeitbares Format umgewandelt, während in dem intern verarbeitbaren Format vorliegende Daten überprüft und in das zum Senden erforderliche externe Übertragungsformat umgewandelt werden. Dabei werden Nachrichten zwischen dem Telekommunikationsendgerät und dem Server in dem intern verarbeitbaren Format übermittelt, während Nachrichten zwischen dem Server und dem zugrundeliegenden Kommunikationsnetz in dem externen Übertragungsformat übermittelt werden.

Nachstehend soll eine Ausführungsform der Erfindung anhand eines Ausführungsbeispiels näher erläutert werden.

Zum Errichten bzw. Aufbau einer Telekommunikationsverbindung zwischen einem Telekommunikationsendgerät, welches mobil ausgebildet sein kann, und einem zugeordneten an ein Kommunikationsnetz angeschlossenen Server, benötigt das Telekommunikationsendgerät ein Protokoll, welches mit dem in dem Kommunikationsnetz verwendeten Protokollstandard korrespondiert. Im Ausführungsbeispiel handelt es sich um ein Signalisierungsprotokoll, nämlich um das sog. "Session Initiation Protocol (SIP)". Das Telekommunikationsendgerät steht dabei innerhalb eines Internet-Kommunikationsnetzes mit einer zentralen Server - Rechnereinrichtung beispielsweise über ein drahtloses Local-Area-Netzwerk, ein sog. "wireless LAN (Local Area Network)", in Verbindung. In einem DECT-Kommunikationsnetz ist das Telekommunikationsendgerät als DECT-Endgerät, beispielsweise als schnurloses Telefon, ausgebildet und steht mit einer DECT-Basisstation als Server in Verbindung. Als Basisstation ist auch eine zentrale als Knotenpunkt des Kommunikationsnetzes ausgebildete Verteilereinrichtung, ein sog. "Hub", einsetzbar.

Ein User-spezifischer Teil des für das Telekommunikationsendgerät vorgesehenen SIP-Protokolls, also der in einem Endterminal laufende Teil des SIP-Protokolls, weist eine Zustandsmaschine, d.h. ein sequentiell arbeitendes Programm mit einer vorbestimmten Sequenz von Zuständen, auf, wobei der Zustandsmaschine ein sog. Parser zum Empfangen ankommender Nachrichten und ein Assembler zugeordnet ist; der Parser überprüft die ankommenden im Textformat ISO 10646 UTF-8 übertragenen Nachrichten und wandelt diese in ein internes Format um, welches leichter verarbeitbar ist. Der Assembler wandelt demgegenüber die Daten einer Nachricht vor dem Absenden von dem internen Format in das zur Übertragung vorgesehene Textformat ISO 10646 UTF-8 und überprüft dabei die Semantik der Daten. Dabei ist das Textformat ISO 10646 UTF-8 ein nach ISO 10646 spezifiziertes Übertragungsformat, dem eine 8-Bit Struktur zugrundeliegt. Das Überprüfen und Umwandeln der Daten beansprucht aufgrund der dazu erforderlichen komplexen Operationen mit Zeichenketten in hohem Maß die Rechenzeit und aufgrund der dazu erforderlichen Algorithmen verfügbaren Speicherplatz. Gemäß der Erfindung werden die dem Telekommunikationsendgerät zugehörigen Parser- und Assemblerfunktionen auf einem zentralen Server oder Proxyserver implementiert, wobei die Kommunikation zwischen dem User-spezifischen Teil des SIP-Protokolls und im Telekommunikationsendgerät residenten Applikationsprogrammen über eine Programmierschnittstelle erfolgt. Dabei wird zwischen dem Server und dem Internet als Kommunikationsnetz das von dem SIP - Protokollstandard verwendete Textformat UTF-8 gemäß ISO 10646 verwendet, während zwischen dem Telekommunikationsendgerät und dem zugeordneten Server das interne Format übertragen wird. Erfindungsgemäß werden dabei ankommende Nachrichten im Server mittels der dort implementierten und dem Telekommunikationsendgerät zugehörigen Protokollfunktionen geprüft, dann in das interne Format gewandelt und zum Telekommunikationsendgerät gesendet. Da im Telekommunikationsendgerät diese Daten nicht mehr dekodiert werden müssen, wird Rechenleistung in erheblichem Umfang eingespart. Von dem Telekommunikationsendgerät gesendete Nachrichten werden bis zum Server im internen Format übertragen, wobei die Nachrichten im Server gewandelt, überprüft und ins Internet gesendet werden. Im bevorzugten Ausführungsbeispiel verbleibt dabei die Zustandsmaschine im Telekommunikationsendgerät, so daß das Endgerät auf besonders einfache und effiziente Weise auf die in den Server dislozierten Protokollfunktionen des Parsers und des Assemblers zugreifen kann, indem die im Endgerät aufgenommene Zustandsmaschine deren Protokollfunktionen aufruft bzw. aktiviert, um eine Kommunikationsverbindung aufzubauen.

## Patentansprüche

1. Telekommunikationsendgerät zum Austausch von Nachrichten mittels eines Servers in einem Kommunikationsnetz, wobei durch gemäß einem Protokollstandard arbeitende Protokollmittel Nachrichten oder Informationen zwischen dem Telekommunikationsendgerät und dem zugeordneten Server austauschbar sind, **dadurch gekennzeichnet, daß** Protokollfunktionen des Telekommunikationsendgeräts zumindest teilweise in dem Server implementiert und von dem Telekommunikationsendgerät betätigbar sind.

2. Telekommunikationsendgerät nach Anspruch 1, **dadurch gekennzeichnet, daß** als Protokollstandard ein Signalisierungsprotokoll vorgesehen ist.

3. Telekommunikationsendgerät nach Anspruch 2, **dadurch gekennzeichnet, daß** das Signalisierungsprotokoll als Session-Initiation-Protocol- Protokollstandard ausgebildet ist.

4. Telekommunikationsendgerät nach einem der Ansprüche 1 bis 3, **dadurch gekennzeichnet, daß** die Protokollfunktionen im wesentlichen einen Parser zum Überprüfen von in einem externen Übertragungsformat ankommenden Daten und zum Umwandeln dieser Daten in ein intern verarbeitbares Format sowie einen Assembler zum Überprüfen von in dem intern verarbeitbaren Format vorliegenden Daten und zum Umwandeln dieser Daten in das zum Absenden erforderliche externe Übertragungsformat aufweisen.

5. Telekommunikationsendgerät nach Anspruch 4, **dadurch gekennzeichnet, daß** die im Server implementierten Protokollfunktionen des Telekommunikationsendgeräts mittels einer zugeordneten und im Telekommunikationsendgerät residenten Zustandsmaschine betätigbar sind.

6. Telekommunikationsendgerät nach Anspruch 4, **dadurch gekennzeichnet, daß** die im Server implementierten Protokollfunktionen des Telekommunikationsendgeräts die Zustandsmaschine für den Parser und den Assembler aufweisen.

7. Server zur Anwendung bei einem Telekommunikationsendgerät nach einem der Ansprüche 1 bis 6.

8. Verfahren zum Betreiben des Telekommunikationsendgeräts nach einem der Ansprüche 1 bis 6, **dadurch gekennzeichnet, daß** die dem Telekommunikationsendgerät zugeordneten und im Server implementierten Protokollfunktionen von dem Telekommunikationsendgerät betätigt werden.

9. Verfahren nach Anspruch 8, **dadurch gekennzeichnet, daß** mittels der dem Telekommunikationsendgerät zugeordneten und im Server implementierten Protokollfunktionen in einem externen Übertragungsformat ankommende Daten überprüft und in ein intern verarbeitbares Format umgewandelt werden und daß in dem intern verarbeitbaren Format vorliegende Daten überprüft und in das zum Senden erforderliche externe Übertragungsformat umgewandelt werden.

10. Verfahren nach Anspruch 9, **dadurch gekennzeichnet, daß** Nachrichten zwischen dem Telekommunikationsendgerät und dem Server in dem intern verarbeitbaren Format übermittelt werden.

11. Verfahren nach Anspruch 9 oder 10, **dadurch gekennzeichnet,daß** Nachrichten zwischen dem Server und dem zugrundeliegenden Kommunikationsnetz in dem externen Übertragungsformat übermittelt werden.
